# EUROPEAN PATENT APPLICATION

(11) **EP 4 389 453 A1**
(43) Date of publication of application: **26.06.2024**
(21) Application number: 22216145.7
(22) Date of filing: 22.12.2022
(51) Int. Cl.: B43K 8/24, B43K 24/08, G06F 3/0354, B43K 8/02

(54) **WRITING INSTRUMENTS**

(71) Applicant: BIC Violex Single Member S.A., 14569 Anoixi (GR)
(72) Inventor: Kopelas, Panagiotis, 14569 ANOIXI (GR)
(74) Representative: Cabinet Beau de Loménie

(57) **Abstract**

A writing instrument (10) comprising:
-a barrel (12) having a longitudinal axis (X),
- a cartridge (16) having a writing tip (22) at one end,
-a self-retracting and sealing system (20) configured to slide axially the cartridge (16) inside the barrel (12) between a first position wherein the writing tip (22) extends outside the barrel (12) and a second position wherein the writing tip (22) is retracted inside the barrel (12) along an axial rearward direction (R), the self-retracting and sealing system (20) comprising:
-a button (25) configured to, when actuated, move the writing tip (22) into the first position, and when not actuated, move the writing tip (22) into the second position, and
-a flap (37) controlled by the button such that the flap (37) is configured to move into an open position when the button (25) is actuated and to move into a closed position otherwise.

## Description

### Technical Field

The present disclosure relates to the field of writing devices. More specifically, the present disclosure relates to writing devices with a writing tip that can be extended and retracted and sealed.

### Background

Writing instruments comprising a barrel and a writing tip that can be extended outside the barrel for writing purpose when a user actuates a writing tip extensionretraction system inside the barrel and retracted inside the barrel when the user no longer needs to use the writing instrument are largely known.

However, these systems are not designed to provide protection to the internal components of the writing instrument, which may be subject to damage or drying out if exposed to the ambient environment, while also prioritizing seamless extension of the writing tip during operation and retraction during non-operation.

The present disclosure aims to address one or more problems in the prior art.

### Summary

In a first aspect, the present disclosure relates to a writing instrument comprising a barrel having a longitudinal axis, a cartridge, a writing tip provided at one end of the cartridge and a self-retracting and sealing system configured to slide the cartridge axially inside the barrel between a first extended forward position wherein the writing tip extends outside the barrel and a second retracted rearward position wherein the writing tip is retracted inside the barrel from the first extended forward position along an axial rearward direction, the self-retracting and sealing system comprising a button configured to, when actuated, move the cartridge into the first extended forward position, and when not actuated, move the cartridge into the second retracted rearward position, and a flap controlled by the button such that the flap is configured to move into an open position when the button is actuated and to move into a closed position when the button is not actuated, wherein when the flap is in the closed position, the flap substantially covers a writing orifice of the writing instrument.

Thus, aspects of the present disclosure are able to provide an intuitive system for providing the easiest usage experience along with superior protection of the sensitive inner components of the writing instrument. Opening the writing instrument is natural and unobtrusive to the use of the writing instrument itself. Further, when the writing instrument is not in use, the writing tip is automatically withdrawn into the barrel of the writing instrument and protected against the deleterious effects of the ambient environment. Additionally, the system is not bound to the orientation of the writing instrument itself, and thus is effective regardless of the circumstances of usage.

In an example, the self-retracting and sealing system further comprises a linkage that connects the button and the cartridge, the linkage being configured to convert an actuation of the button into a linear motion of the cartridge along the axis.

In an example, the flap further comprises a seal configured to interact with the barrel such that, when the flap is in the closed position, the barrel is substantially airtight.

In an example, the seal is a rubber seal.

In an example, the flap is connected to the button through a pivot point.

In an example, the flap and the button are integrally formed.

In an example, the button is located on the barrel so as to be operated by a user when the writing instrument is held in a writing position.

In an example, the self-retracting and sealing system further comprises a biasing member configured to push the self-retracting and sealing system toward the second retracted rearward position.

In an example, the biasing member is a spring.

In an example, the biasing member is configured to exert permanent opposite pressure against the actuation of the button.

In an example, the biasing member is connected to the cartridge.

In an example, the linkage is configured to better resist the biasing member the more parallel the linkage is to the axis during actuation.

Thus, due to the construction of the writing instrument, the sealing system is able to avoid adding undue strain to the user while still operating effectively. The user does not need to provide excess force to keep the button pressed, and so any additional inconvenience by the inclusion of the system is avoided.

In an example, the writing instrument further comprises a cartridge carrier having one or more bearings for supporting the cartridge inside the barrel.

In an example, the writing tip is a stylus for use with an electronic writing surface.

In an example, the cartridge is configured to supply writing medium such as ink to the writing tip.

The writing medium may comprise or consist of a solid writing medium, for example graphite; a liquid writing medium, for example ink; or any kind of writing medium available to the skilled person.

In an example, the writing instrument is ink-based. In other words, the writing medium is made of or comprises ink.

### Brief Description of the Drawings

Figure 1 show a half section view an exemplary embodiment of a writing instrument of the present disclosure in a first position.
Figure 2 shows a perspective view of an exemplary embodiment of a writing instrument of the present disclosure.
Figure 3 shows a half section view of an exemplary embodiment of a writing instrument of the present disclosure in a second position.
Figure 4 shows a perspective view of an exemplary embodiment of a writing instrument of the present disclosure in a second position.

### Detailed Description

Hereinafter, a detailed description will be given of the present disclosure. The terms or words used in the description and the aspects of the present disclosure are not to be construed limiting as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

In the present disclosure the term "gravity" naturally refers to the newtonian gravitational acceleration created by the earth and the term "gravity direction" refers to the direction of the acceleration which is oriented downwardly with respect to the location where the writing instrument is located.

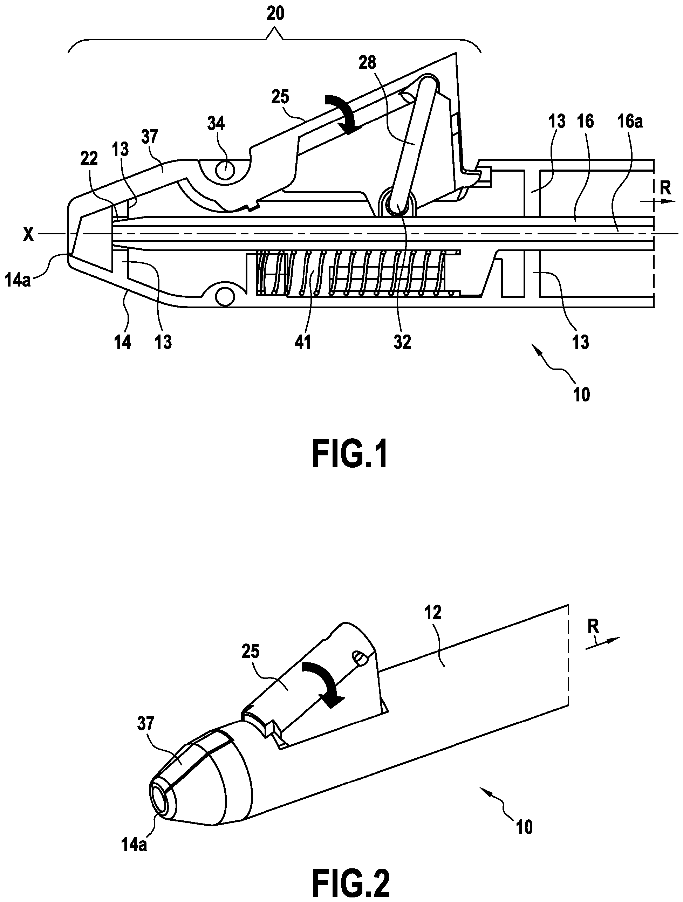

In a first exemplary embodiment, the present disclosure relates to a writing instrument as shown in figures 1 and 2 of which the description follows. Figure 1 a schematic partial view of a writing instrument 10. Certain features of the writing instrument 10 are rendered invisible for ease of view in fig. 1. Fig. 2 is a perspective view of the writing instrument 10. The following description will be made with reference to figures 1 and 2 simultaneously as some details of the writing instrument do not appear on all the figures.

The writing instrument 10 may be a marker, a felt pen, a highlighter, a ball point pen, a permanent or non-permanent marker or any other type of writing instrument or stylus with an extension and retraction mechanism for extending and retracting a writing tip of the instrument when necessary. The writing tip may, for example, convey ink to a writing surface when the writing instrument is ink-based. Alternatively, or additionally, the writing tip may be a contact point when the writing instrument is a stylus, such as, for instance, a stylus that may be used to interact with an electronic writing surface.

The writing instrument 10 may comprise a barrel or tubular body 12 having a longitudinal axis X. The tubular body 12 may be a unitary body, or may comprise multiple components. In Figure 1, a portion of the length of the barrel 12 has been withdrawn to show the internal mechanism involved in the present disclosure.

The writing instrument 10 may comprise at a first forward end of the barrel 12 a tip component 14 comprising a writing orifice 14a which is located at the proximal end of the tip component 14. The tip component 14 may be a part of the barrel 12 such that the tip component 14 and the barrel 12 are of unibody construction (integrally formed), or the tip component 14 may be detachable, such as through a screw-like interface, such that the tip component 14 may be removed, for example, to replace internal components of the writing instrument 10. The writing instrument 10 may also include a cartridge 16. In an example where the writing instrument 10 is an ink-based marking device, the cartridge 16 may be a conveyance for transporting ink to a writing tip 22 of the cartridge 16, such as via a channel 16a. The writing instrument 10 may include components for supporting the cartridge 16 within the writing instrument 10, such as a cartridge carrier 13. The cartridge carrier 13 may include one or more bearings for centering the cartridge 16 inside the barrel 12. For example, the cartridge carrier 13 may include one or more sliding bearings. The writing instrument 10 may further comprise in the tubular body a tank (not shown) for storing a writing ink used by the writing tip 22. The barrel 12 may extend longitudinally in a rearward direction so as to cover as a sheath the internal components of the writing instrument. The writing instrument 10 may include other components or accessories typical to writing instruments, such as, but not limited to, a clip or an eraser.

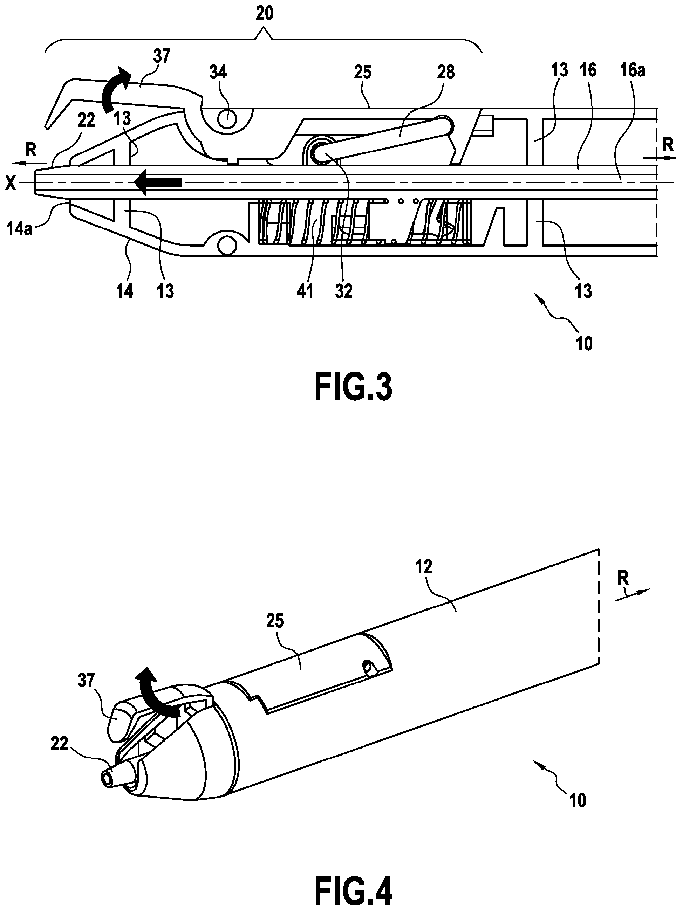

The writing instrument 10 may comprise a self-retracting and sealing system 20 (hereinafter, "sealing system") that is configured to, when operated by a user, slide the writing tip 22 axially (along axis X) through the barrel 12 between a first extended forward position (figs. 3 and 4), wherein the writing tip 22 extends outside the writing orifice 14a, and a second retracted rearward position (figs. 1 and 2), in which the writing tip 22 has been retracted inside the barrel 12 along an axial rearward direction (arrow R) from the first extended forward position of figures 3 and 4. The sealing system 20 is further configured to enclose the writing tip when in the second rearward position.

The sealing system 20 may include a button 25 with at least a portion that is located on an external face of the writing instrument 10 such that it is accessible to a user. The button 25 may be located such that the user may actuate the button 25 when holding the writing instrument 10 in a writing position, e.g., when the user is holding the writing instrument 10 near the first forward end of the writing instrument 10 so as to mark a surface using the writing instrument 10. In the example shown, the button 25 is a hinge-style projection that extends from the outer surface of the barrel 12 perpendicularly to axis X and is located proximately to the writing orifice 14a. Thus, when a user is holding the writing instrument, such as to use the writing instrument in the act of marking a surface, the user may be able to operate the button 25 in a manner that is natural to the act of gripping a writing instrument 10, such as to operate the button 25 with a finger of the writing hand.

The button 25 may be connected via a linkage 28 to the cartridge 16. The linkage 28 may be configured so as to convert an actuation of the button 25, which may produce a rotation of the linkage 28, into a linear motion of the cartridge 16 along axis X. Figs. 3 and 4 show a schematic partial view and a perspective view, respectively, of the writing instrument 10 in a state during actuation of the button 25. When the button 25 is actuated, the portion of the linkage 28 connected to the button 25 may be moved towards axis X. This may push the portion of the linkage 28 connected to the cartridge 16 toward the writing orifice 14a, and thus extend the writing tip 22 outside of the barrel 12 through the writing orifice 14a. For instance, the portion of the linkage 28 connected to the button 25 may be substantially fixed laterally such that it moves along the axis X in sync with the button 25, but may be able to rotate at the point of the connection to the button 25. The portion of the linkage 28 connected to the cartridge 16 may be substantially fixed relative to the cartridge 16 such that it moves along the axis X in sync with the cartridge 16, but may be able to rotate at the point of the connection to the cartridge 16. The linkage 25 may be connected to the cartridge via a pin 32.

The sealing system 20 may include a flap 37 that is configured to, when closed (such as in figs. 1 and 2), enclose the writing tip 22 within the barrel 12 of the writing instrument 10, and when opened (such as in figs. 3 and 4), allow passage of the writing tip 22 outside of the barrel 12 of the writing instrument 10. Thus, the flap 37 may be located at the end of the barrel 12 nearest the writing tip 22. The flap 37 may be located on and/or form a part of the external surface of the barrel 12. In the example shown, the flap 37 is a segment of the barrel tip component 14 that runs parallel to axis X. The flap 37 may have an end portion that is configured to substantially "fill in" the writing orifice 14a. The end portion of the flap 37 may be at an angle to the walls of the barrel tip component 14. Thus, when the flap 37 is in the closed position shown in figs. 1 and 2, the flap 37 may form a "cap" such that the writing tip 22 may be substantially enclosed within the barrel 12. In an aspect, the flap 37 may include a seal, such as a rubber seal, positioned on an inner surface of the flap 37 and that is configured to, when the flap 37 is in the closed position, interact with the barrel 12 so as to make the interface between the flap 37 and the barrel tip component 14 substantially air tight. Figs. 3 and 4 show that when the flap 37 is in the open position, the flap 37 moves away from axis X to open the writing orifice 14a and expose the writing tip 22. The button 25 is configured to pivot about a pivot point, such as pin axis 34, that is perpendicular to the axis X of the barrel 12. The pin axis 34 may be located on or near an external surface of the barrel 12, and the pin axis 34 may be formed of a portion of the barrel 12. The flap 37 is similarly able to pivot about the pin axis 34. The flap 37 may be connected to the button 25 such that the flap 37 and button 25 may pivot in sync, such that when the button 25 rotates in a counter clockwise direction, the flap 37 also rotates in a counter clockwise direction, and when the button 25 rotates in a clockwise direction, the flap 37 also rotates in a clockwise direction. Thus, the flap 37 is controlled by the button such that the flap 37 is configured to move into an open position when the button 25 is actuated and to move into a closed position when the button 25 is not actuated, wherein when the flap 37 is in the closed position, the flap 37 substantially covers the writing orifice 14a.

In embodiments, the button 25 and flap 37 may be formed of a single member such that the button 25 and flap 37 may be cohesively connected in a unibody construction (integrally formed) or formed together as an integral member with a button 25 portion and a flap 37 portion. For instance, the button 25 and flap 37 may be cast as a single member from plastic, metal, or a similar material.

When the button 25 is in the resting position (figs. 1 and 2), such that a user has not actuated the button, the flap 37 may be in the closed position covering the writing orifice 14a. Thus, actuation of the button 25 (figs. 3 and 4), such as by a user, provides for: 1) the flap 37 being moved into an open position such that the writing orifice 14a is no longer covered and the writing tip 22 is exposed, and 2) the writing tip 22 being pushed laterally (e.g., along axis X) through the writing orifice 14a such that the writing tip 22 is now in position for marking. Likewise, when the button 25 is released, the writing tip 22 may be withdrawn back into the barrel 12 of the writing instrument 10, and the flap may move into the closed position, thus returning the writing instrument 10 to the state of figs. 1 and 2.

The sealing system 20 may further comprise a biasing member 41, e.g. a spring, that is longitudinally disposed in the writing instrument 10 and has two opposite ends along its longitudinal dimension: one end may rest against at least one fixed stop that is arranged on an inner surface of the barrel 12, e.g. under the form of a peripheral inner ridge, and the opposite end of biasing member 41 may be ostensibly connected to the button 25, either directly or through an intermediary component. In the illustrations, the biasing member 41 is connected to the cartridge 16, and it is to be understood that the biasing member 41 may be connected operationally to the button 25 through linkages or components within the sealing system 20. Thus the biasing member 41 is positioned between a fixed part of the barrel 12 and a component of the button 25, or component otherwise interlinked with the button such as the cartridge 16, so as to exert permanent opposite (antagonistic) pressure against the actuation of the button 25. This ultimately pushes in a rearward direction the cartridge 16, and therefore pushes the sealing system 20 toward the second retracted position.

Because the button 25 is exerting a torque force on the linkage 28 during actuation, the linkage 28 becomes increasingly parallel to the axis X (that is, the linkage 28 forms an angle with the axis X which increasingly decreases to approach zero), and thus to the biasing member 41. As the linkage 28 becomes increasingly parallel to the axis X, less torque force is required to counteract the biasing member 41. Therefore, the linkage 28 is configured to better resist the biasing member 41 the more parallel the linkage is to axis X. the more parallel the linkage 28 becomes, e.g. during the process of actuating the button 25, the less force is needed to keep the button 25 pressed to counteract the force of the biasing member 41.

When the user ceases to actuate the button 25, the sealing system 20 is automatically released without any further specific action from the user and can slide rearwardly inside the barrel 12 under the action of biasing member 41, which is no longer compensated for by the actuation of the button 25, to occupy the second retracted position. Therefore the mere release of the button 25 as described above makes it possible to automatically close the sealing system 20 and cause the latter to move to a second retracted rearward position wherein the writing tip 22 is retracted inside the barrel 12 and the flap 37 is closed over the writing tip 22.

Although the embodiments of the present disclosure have been disclosed for illustrative purposes, those skilled in the art will appreciate that various modifications and alterations are possible, without departing from the present disclosure. It is also to be understood that such modifications and alterations are incorporated in the scope of the present disclosure and the accompanying claims.

## Claims

1. A writing instrument (10) comprising:
- a barrel (12) having a longitudinal axis (X),
- a cartridge (16),
- a writing tip (22) provided at one end of the cartridge (16),
- a self-retracting and sealing system (20) configured to slide the cartridge (16) axially inside the barrel (12) between a first extended forward position wherein the writing tip (22) extends outside the barrel (12) and a second retracted rearward position wherein the writing tip (22) is retracted inside the barrel (12) from the first extended forward position along an axial rearward direction (R), the self-retracting and sealing system (20) comprising:
- a button (25) configured to, when actuated, move the cartridge (16) into the first extended forward position, and when not actuated, move the cartridge (16) into the second retracted rearward position, and
- a flap (37) controlled by the button (25) such that the flap (37) is configured to move into an open position when the button (25) is actuated and to move into a closed position when the button (25) is not actuated, wherein when the flap (37) is in the closed position, the flap (37) substantially covers a writing orifice (14a) of the writing instrument (10).

2. The writing instrument (10) according to claim 1, wherein the self-retracting and sealing system (20) further comprises a linkage (28) that connects the button (25) and the cartridge (16), the linkage (28) being configured to convert an actuation of the button (25) into a linear motion of the cartridge (16) along the axis (X).

3. The writing instrument (10) according to any one of the previous claims, wherein the flap (37) further comprises a seal configured to interact with the barrel (12) such that, when the flap (37) is in the closed position, the barrel (12) is substantially airtight.

4. The writing instrument (10) according to the previous claim, wherein the seal is a rubber seal.

5. The writing instrument (10) according any of the previous claims, wherein the flap (37) is connected to the button (25) through a pivot point.

6. The writing instrument (10) according to any one of claims 1 to 4, wherein the flap (37) and the button (25) are integrally formed.

7. The writing instrument (10) according to any one of the previous claims, wherein the button (25) is located on the barrel (12) so as to be operated by a user when the writing instrument (10) is held in a writing position.

8. The writing instrument (10) according to any one of the preceding claims, wherein the self-retracting and sealing system (20) further comprises a biasing member (41) configured to push the self-retracting and sealing system (20) toward the second retracted rearward position.

9. The writing instrument (10) according to claim 8, wherein the biasing member (41) is a spring.

10. The writing instrument (10) according to claim 8 or 9, wherein the biasing member (41) is configured to exert permanent opposite pressure against the actuation of the button (25).

11. The writing instrument (10) according to any one of claims 8 to 10, wherein the biasing member (41) is connected to the cartridge (16).

12. The writing instrument (10) according to any one of claims 8 to 11 in combination with claim 2, wherein the linkage (28) is configured to better resist the biasing member (41) the more parallel the linkage (28) is to the axis (X) during actuation.

13. The writing instrument (10) according to any one of the previous claims, further comprising a cartridge carrier (13) having one or more bearings for supporting the cartridge (16) inside the barrel (12).

14. The writing instrument (10) according to any one of the previous claims, wherein the writing tip (22) is a stylus for use with an electronic writing surface.

15. The writing instrument (10) according to any one of claims 1 to 13, wherein the cartridge (16) is configured to supply a writing medium such as ink to the writing tip (22).
